# EUROPÄISCHE PATENTANMELDUNG

(11) **EP 0 973 315 A2**
(43) Veröffentlichungstag der Anmeldung: **19.01.2000**
(21) Anmeldenummer: 99113092.3
(22) Anmeldetag: 06.07.1999
(51) Int. Cl.: H04M 3/51, H04M 3/523

(54) **Verfahren und Anordnung zum Betrieb eines Operatorvermittlungsplatzes in einem Telekommunikationssystem**

(30) Priorität: 17.07.1998 DE 19832315
(71) Anmelder: SIEMENS AKTIENGESELLSCHAFT, 80333 München (DE)
(72) Erfinder: Kienberger, Helmut, 81249 München (DE)

(57) **Zusammenfassung**

Mittels eines Leistungsmerkmalservers können zusätzliche Leistungsmerkmale zu in einem Telekommunikationssystem bereits vorhandenen Leistungsmerkmalen realisiert werden. Im Telekommunikationssystem wird hierzu ein separates Modul bereitgestellt, das den Aufruf von Leistungsmerkmalen auf dem Leistungsmerkmalserver bzw. auf dem Telekommunikationssystem koordiniert und die Präsentation der entsprechenden Leistungsmerkmale auf dem Operatorvermittlungsplatz steuert. Als Operatorvermittlungsplatz ist beispielsweise ein Personalcomputer vorgesehen, für den lediglich bezüglich der Zusatzleistungsmerkmale eine Bedienoberfläche geschaffen werden muß. Für die Nutzung von Standardleistungsmerkmalen wird auf die Standardbedienoberfläche und für die zusätzlichen Leistungsmerkmale auf die Zusatzbedienoberfläche zugegriffen. Insbesondere werden dem Operator durch diese neue Funktionalität mehrere Warteschlangen angeboten, auf die er separat zugreifen kann.

## Beschreibung

Trotz der zunehmenden Vernetzung und Automatisierung von Kommunikationssystemen, besteht das Bedürfnis manuell in den Kommunikationsablauf eingreifen zu können. Bekannt sind Operatorvermittlungsplätze für den Einsatz an Telefonauskunftsplätzen. Auch im Dienstleistungsgewerbe werden vermehrt sog. Callcenter eingerichtet, um auf Kundenbedürfnisse schnell und spezifisch reagieren zu können, und den Vertrieb von Dienstleistungsprodukten effizient zu gestalten. Charakterisiert sind solche Einrichtungen durch eine Vielzahl eingehender Anrufe, welche an eine Mehrzahl von Operatorvermittlungsplätzen weitergegeben werden müssen. Solche Operatorvermittlungsplätze können an ein Nebenstellentelekommunikationssystem angeschlossen sein, das beispielsweise eine Software zur Anrufordnung und zur Verteilung der Anrufer auf die zur Verfügung stehenden Operatorvermittlungsplätze enthält. Für diesen Einsatzfall kann beispielsweise die Unterscheidung von Warteschlangen interner Anrufer und externer Anrufer getroffen werden und am Operatorvermittlungsplatz eine Auswahlmöglichkeit vorhanden sein, um einen internen oder externen Kommunikationsteilnehmer auszuwählen. Neben der Verfügbarkeit eines solchen Auswahlleistungsmerkmales, können aber kundenseitig unterschiedlichste Anforderungen bezüglich zur Verfügung stehender Leistungsmerkmale auf einem Operatorvermittlungsplatz gegeben sein. Auch der zunehmende Konkurrenzdruck unter den Kommunikationssystemanbietern erfordert ein möglichst schnelles und flexibles Reagieren auf derartige Markterfordernisse.

Aus dem Firmenprospekt der Firma SGCS, ist es beispielsweise bekannt, für den Einsatz in Callcentern Operatorvermittlungsplätze vorzusehen, in denen Online Veränderungen an der Konfiguration des Systems durchgeführt werden können. Auf diese Weise können unterschiedlichen Operatorvermittlungsplätzen Anrufer in unterschiedlichen Warteschlangen zugeteilt werden.

Die der Erfindung zugrunde liegende Aufgabe besteht darin, ein Verfahren und eine Anordnung zum Betrieb eines Operatorvermittlungsplatzes anzugeben, welche flexibel konfigurierbar sind, und dabei einen möglichst geringen technischen Realisierungsaufwand erfordern.

Diese Aufgabe wird für das Verfahren gemäß den Merkmalen des Patentanspruches 1 und für die Anordnung gemäß den Merkmalen des Patentanspruches 7 gelöst. Weiterbildungen der Erfindung ergeben sich aus den abhängigen Ansprüchen.

Ein besonderer Vorteil des erfindungsgemäßen Verfahrens besteht darin, daß durch Einsatz eines Leistungsmerkmalservers vorhandene Ressourcen genutzt werden können, sowie der technische und der Investitionsaufwand für die Realisierung gering bleiben.

Vorteilhaft wird beim beschriebenen Verfahren die Arbeitsteilung zwischen dem Telekommunikationssystem und dem Leistungsmerkmalserver von dem Telekommunikationssystem aus koordiniert, da dort die Anrufe eingehen und somit der Kommunikationsaufwand innerhalb des Bereiches der Anlage reduziert wird. Lediglich zur Bereitstellung bestimmter Leistungsmerkmale muß das Telekommunikationssystem mit dem Leistungsmerkmalserver kommunizieren.

Vorteilhaft wird bei einer Weiterbildung des beschriebenen Verfahrens zur Realisierung bestimmter Leistungsmerkmale vom Operatorvermittlungsplatz aus mit dem Leistungsmerkmalserver kommuniziert, da auf diese Weise die durch den Aufruf des Leistungsmerkmals entstehenden Netzbelastungen minimiert werden.

Vorteilhaft werden bei einer Weiterbildung des beschriebenen Verfahrens am Operatorvermittlungsplatz eine Mehrzahl von Teilnehmerwarteschlangen angeboten, da die Kommunikationsteilnehmer auf diese Weise nach unterschiedlichen Sortierkriterien, wie beispielsweise ihrer Wichtigkeit, nach Name, Ort etc., den Warteschlangen zuordenbar sind und für den Operator ersichtlich ist, wieviel Kommunikationsteilnehmer in den jeweiligen Warteschlangen anstehen.

Vorteilhaft kann der Operator bei einer Weiterbildung des beschriebenen Verfahrens aus den unterschiedlichen Warteschlangen einen Kommunikationsteilnehmer auswählen, um eine den Anwendungsbedürfnissen gemäße differenzierte Entscheidung treffen zu können. Beispielsweise können auf diese Art besonders dringende Anrufe vom Chef zuerst entgegengenommen werden.

Besonders vorteilhaft sind bei einer Weiterbildung des beschriebenen Verfahrens unterschiedliche Leistungsmerkmale mit unterschiedlichen Bedienoberflächen verknüpft auf diese Weise gestaltet sich der Realisierungsaufwand für den Einsatz zusätzlicher Leistungsmerkmale besonders gering, da für den Einsatz von Standardleistungsmerkmalen, die beispielsweise im Vermittlungsrechner vorhanden sind, auch die Standardbedienoberfläche verwendet werden kann und lediglich für die Anwendung zusätzlicher Leistungsmerkmale entsprechende Eingabemittel geschaffen werden müssen. Besonders vorteilhaft können diese zusätzlichen Eingabemöglichkeiten auf dem Leistungsmerkmalserver gespeichert sein und dem Operatorvermittlungsplatz über ein Datennetz, beispielsweise ein lokales Netz, zur Verfügung gestellt werden.

Besonders vorteilhaft wird bei einer erfindungsgemäßen Anordnung der Operatorvermittlungsplatz über zwei unterschiedliche Leitungsarten jeweils mit dem Telekommunikationssystem und dem Leistungsmerkmalserver verbunden, während dieser wiederum über eine Datenleitung an das Telekommunikationssystem angeschlossen ist. Auf diese Weise wird vorteilhaft erreicht, daß Standardtelekommunikationssysteme einsetzbar sind und die Verbindungen zum Operatorvermittlungsplatz mit diesem Telekommunikationssystem weiter verwendet werden können. Weiterhin kann für den Leistungsmerkmalserver durch den Einsatz von beispielsweise einem CTI-Interface und dem Anschluß des Operatorvermittlungsplatzes über ein lokales Netz an den Server ein hohes Maß an Flexibilität zur Realisierung verschiedenster Leistungsmerkmale gewährleistet werden, ohne einen übermäßigen Realisierungsaufwand für die Leistungsmerkmale betreiben zu müssen.

Besonders vorteilhaft sind bei einer Weiterbildung der beschriebenen Anordnung im Leistungsmerkmalserver und im Telekommunikationssystem unterschiedliche Mittel zur Bereitstellung unterschiedlicher Leistungsmerkmale, sowie im Telekommunikationssystem weitere Mittel vorhanden, die den Einsatz der Mittel zum Aufruf der Leistungsmerkmale koordinieren, weil die Teilnehmeranschlußleitungen in das Telekommunikationssystem münden und bezüglich unterschiedlich ausgestatteter Operatorvermittlungsplätze spezifisch reagiert werden kann. Fallweise kann je nach Leistungsmerkmalausstattung des jeweiligen Operatorvermittlungsplatzes lediglich auf die Mittel zur Bereitstellung von Leistungsmerkmalen im Telekonimunikationssystem zugegriffen werden.

Vorteilhaft weist bei einer Weiterbildung der beschriebenen Anordnung der Operatorvermittlungsplatz separate Mittel zum Zugriff auf Leistungsmerkmale des Telekommunikationssystems, bzw. des Leistungsmerkmalservers auf, weil hier zum einen modular erweiterbare Operatorvermittlungsplätze geschaffen werden können und zum anderen der Realisierungsaufwand für die Mittel zur Bereitstellung der Leistungsmerkmale auf dem Leistungsmerkmalserver gering gehalten werden kann. Vorteilhaft kann so zwischen dem Zugriff auf Standardleistungsmerkmale auf dem Telekommunikationssystem und Leistungsmerkmalen auf dem Leistungsmerkmalserver auch bezüglich ihrer Bereitstellung unterschieden werden.

Vorteilhaft sind bei einer Weiterbildung der beschriebenen Anordnung am Operatorvermittlungsplatz Mittel zur Auswahl eines Anrufs aus einer Mehrzahl von Anruferwarteschlangen vorgesehen, da so gemäß den jeweiligen Anwendungsbedürfnissen eine nicht automatisierbare differenzierte und warteschlangenspezifische Auswahl der Verbindung durch den Operator durchgeführt werden kann.

Im folgenden werden Ausführungsbeispiele der Erfindung anhand von Beispielen und Figuren weiter erläutert.
- Figur 1: zeigt ein Telekommunikationssystem mit Leistungsmerkmalserver und Operatorvermittlungsplätzen
- Figur 2: zeigt Mittel zur Bereitstellung von Leistungsmerkmalen und ihre Anordnung
- Figur 3: veranschaulicht die Abläufe bei der Bereitstellung von Leistungsmerkmalen
- Figur 4: veranschaulicht die Zuteilung von Anrufern zu Warteschlangen und zu Operatorvermittlungsplätzen
- Figur 5: zeigt den Ablauf beim Aufruf von im Telekommunikationssystem nicht vorhandenen Leistungsmerkmalen.

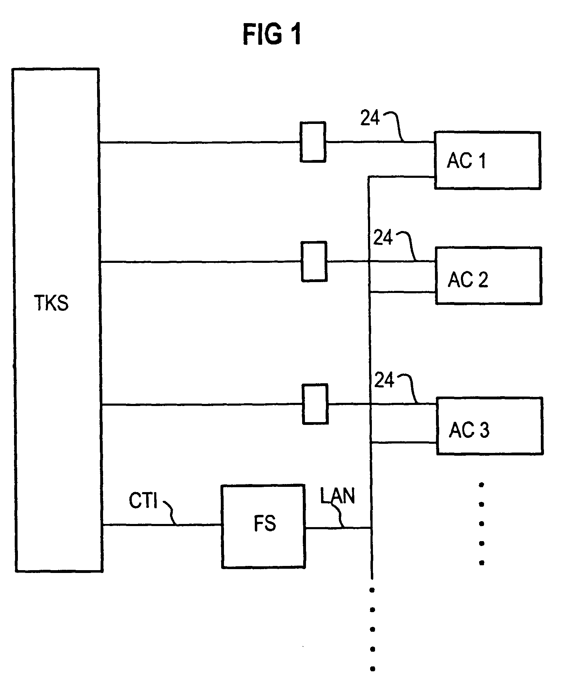

Wie Figur 1 zeigt, besteht eine Anordnung zum Betrieb eines Operatorvermittlungsplatzes AC beispielsweise aus einem Telekommunikationssystem TKS, Operatorvermittlungsplätzen AC1, AC2, AC3 und einem Leistungsmerkmalserver FS. Die Operatorvermittlungsplätze AC sind beispielsweise über Anschlußleitungen V24 über eine parallele bzw. serielle Schnittstelle mit dem Telekommunikationssystem TKS verbunden. Des weiteren sind sie hier über ein lokales Netz LAN an den Leistungsmerkmalserver FS angeschlossen. Dieser wiederum ist über eine Anschlußleitung CTI an das Telekommunikationssystem TKS gekoppelt. Bevorzugt wird der Leistungsmerkmalserver FS über eine Computer-Telefon-Integration-Schnittstelle angeschlossen, da diese Schnittstelle standardisiert ist und somit der technische Realisierungsaufwand für die Bereitstellung zusätzlicher Leistungsmerkmale gering bleibt. Über die Operatorvermittlungsplätze AC kann beispielsweise auf Leistungsmerkmale im Telekommunikationssystem über die Leitungen V24, oder auf Leistungsmerkmale im Leistungsmerkmalserver FS über das lokale Netz und die CTI-Verbindung zugegriffen werden. Ohne Beschränkung der Anwendbarkeit der Erfindung können beliebig viele Operatorvermittlungsplätze AC in einer solchen Konfiguration vorgesehen sein.

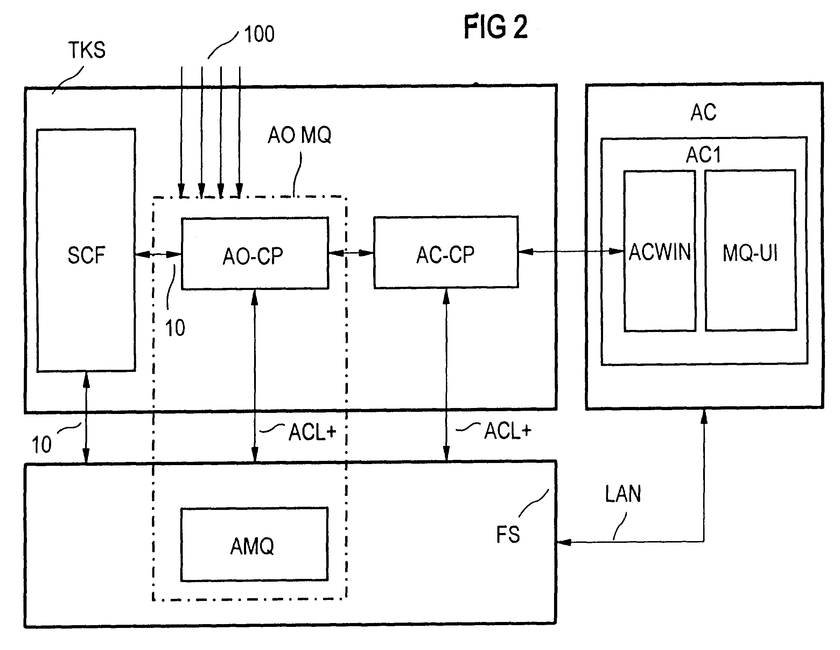

Wie Figur 2 zeigt, können beispielsweise Leistungsmerkmale über unterschiedliche Module im Telekommunikationssystem TKS, im Operatorvermittlungsplatz AC und im Leistungsmerkmalserver FS bereitgestellt werden. Im Telekommunikationssystem TKS warten beispielsweise gleichzeitig verschiedene interne und externe Anrufe 100 auf einen freien Vermittlungsplatz, oder auch auf einen freien aus einer Gruppe von Vermittlungsplätzen. Gemäß dem beschriebenen Verfahren, erfolgt die Anruforganisation für mehrere Warteschlangen AOMQ im Leistungsmerkmalserver FS unter Mitverwendung bereits vorhandener Mittel im Telekommunikationssystem TKS. Die vorhandenen Mittel realisieren die Standard Anrufordnung- und Verteilung. Mit den zusätzlichen externen Mitteln im Leistungsmerkmalserver FS wird zum Beispiel eine wählbare Option zur Anrufordnung verwirklicht. Hierfür ist neben einem Modul für die automatische Anrufordnung- und Verteilung AO-CP im Leistungsmerkmalserver FS ein zusätzliches Modul AMQ für die Aufteilung der Anrufe 100 auf mehrere Warteschlangen und für die parallele Signalisierung auf allen Operatorver-mittlungsplätzen aus beispielsweise einer Gruppe für eine vom Operator festgelegte Anrufauswahl vorgesehen. Weiterhin befinden sich im Telekommunikationssystem TKS Mittel zur Koordination der Standardfunktionen AO-CP und der im Leistungsmerkmalserver FS vorhandenen zusätzlichen Module, hier AMQ. Über dieses Mittel SCF zur Koordination der Server Kontrollfunktion wird über die Leitungen 10, die beispielsweise als über eine CTI-Schnittstelle realisiert ist, festgelegt, wer für die Verteilung der Anrufe zuständig ist; Das Modul AO-CP im Telekommunikationssystem TKS, oder das Modul AMQ im Leistungsmerkmalserver FS. Über die Pfeile ACL+ wird veranschaulicht, daß Modulen im Kommunikationssystem TKS mit Modulen im Leistungsmerkmalserver FS korrespondieren können. Neben der Anrufordnung- und Verteilung für eine Vermittlungsplatzgruppe AO-CP sind im Telekommunikationssystem Funktionen für die Verarbeitung der verteilten kommenden Anrufe und von gehend aufgebauten Verbindungen der Operatorvermitlungsplätze AC vorgesehen. Diese Module sind mit AC-CP bezeichnet und haben hier in diesem Fall keine Entsprechung im Leistungsmerkmalserver FS.

Im Operatorvermittlungsplatz AC selbst sind ebenfalls Module für die Bearbeitung von Standard-Anrufsignalisierung ACWIN und Bedienelemente für die Bearbeitung von Mehrfachwarteschlangen MQ-LM vorgesehen. Diese beiden Module sind beispielsweise in einem Operatorvermittlungsplatz zu einem Gesamtmodul AC1 zusammengefaßt. Für den Fall, daß der Operatorvermittlungsplatz AC über Leistungsmerkmale zur Bearbeitung von mehreren Warteschlangen, d.h. über ein Modul MQ-LM verfügt, greift er, bei Aufruf eines solchen Leistungsmerkmals über das lokale Netz LAN auf den Leistungsmerkmalserver FS zu, um das dort vorhandene Modul AMQ zu verwenden.

Die hier gezeigte Anordnung und Organisation der Module stellt lediglich eine vorteilhafte Ausgestaltung dar und ist nicht zwingend für die Durchführung der Erfindung. Es sind auch beliebige andere Anordnungen von Modulen denkbar, bei denen Leistungsmerkmale im Leistungsmerkmalserver abgearbeitet werden können, welche durch das Modul zur Kontrolle des Leistungsmerkmals SCF aufgerufen, bzw. gesteuert werden können.

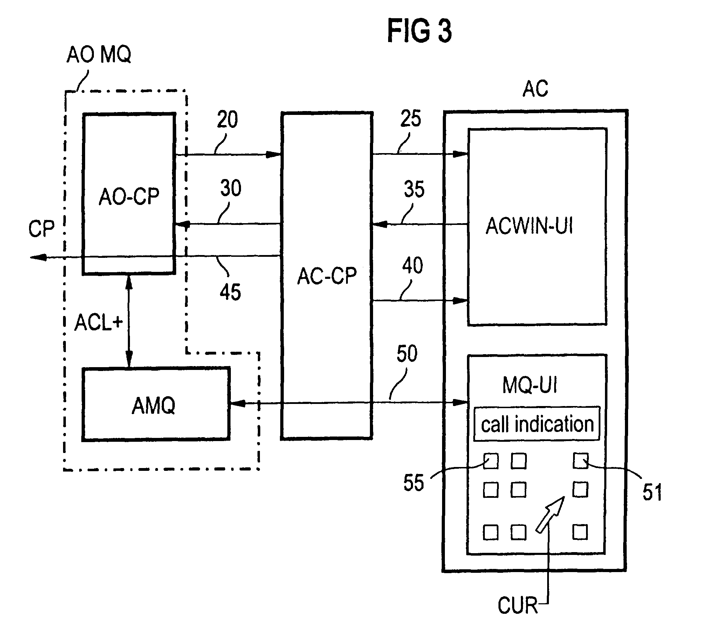

Wie Figur 3 zeigt, kann eine Anruforganisation für mehrere Warteschlangen AOMQ mit Hilfe von Modulen AO-CP, AMQ, AC-CP, ACWIN-UI und MQ-UI auf folgende Weise durchgeführt werden. In diesem Zusammenhang sei auch erwähnt, daß alle Namen innerhalb sämtlicher Figuren gleich verwendet werden und ein Bezug zwischen gleichnamigen Modulen und Einrichtungen besteht.

Beim Modul für die Anruforganisation innerhalb mehrerer Warteschlangen AO-MQ treffen beispielsweise Anrufe von internen und externen Teilnehmern ein. Diese Anrufe werden von dem Modul AO-CP entgegengenommen und an das Modul AC-CP weitergeleitet. Für die Bereitstellung mehrerer Warteschlangen wird das Leistungsmerkmal im Leistungsmerkmalserver angesprochen und das dortige Modul AMQ verwendet. Die Weiterleitung eines im Anrufordner AO-MQ wartenden Anrufs an das Modul des ausgewählten Operatorvermittlungsplatzes AC-CP ist mit dem Pfeil 20 angedeutet. AC-CP zeigt nun dem Operatorvermittlungsplatz auf einer geeignet gestalteten Bedienoberfläche über 25 an, daß ein Anruf vorliegt. Falls lediglich Standardleistungsmerkmale genutzt werden, d.h. also keine parallele Bearbeitung mehrerer Warteschlangen durch den Operatorvermittlungsplatz AC vorgesehen ist, so wird der Anruf einem freien Operator Vermittlungsplatz AC , Beispielsweise aus einer Gruppe, automatisch zugeordnet. Nach der Anfrage durch den Operator erfolgt Tastenmeldung 35 an den Modul AC-CP und Antwortmeldung 45 an den rufenden Teilnehmer.

Für den Fall, daß im Telekommunikationssystem TKS die benutzergesteuerte Auswahl eines Anrufes aus mehreren angebotenen Warteschlangen parallel über alle angeschlossenen Operatorvermittlungsplätze AC vorgesehen ist, so ist am Operatorvermittlungsplatz eine spezielle Bedienoberfläche MQ-UI vorgesehen, um diese Warteschlangen anzuzeigen und beispielsweise mittels Tasten S1 und S5 usw. auszuwählen. Vorzugsweise kann dieses Auswahlfeld in Form einer Anzeige auf einem Computerbildschirm ausgestaltet sein und die Tastendarstellung mittels eines Cursors auf dem Bildschirm angefahren werden.

Anstatt einer Auswahl auf einem Computerbildschirm kann aber auch eine spezielle Tastatur mit Tasten, welche bevorzugt eine LCD-Anzeige integriert haben, vorgesehen sein. Die parallele Anzeige der Anzahl der wartenden Anrufer pro Warteschlange und der Anruferdaten des nächsten anstehenden Anrufers an allen Operatorvermittlungsplätzen AC wird über die Funktion AMQ im Leistungsmerkmalserver FS über 50veranlaßt. Diese kommuniziert über ACL+ mit dem Modul AO-CP im Telekommunikationssystem, worauf nach Abfrage eines Anrufers weitere Bedienvorgänge- / Abläufe wie bei der Standardverteilung verlaufen.

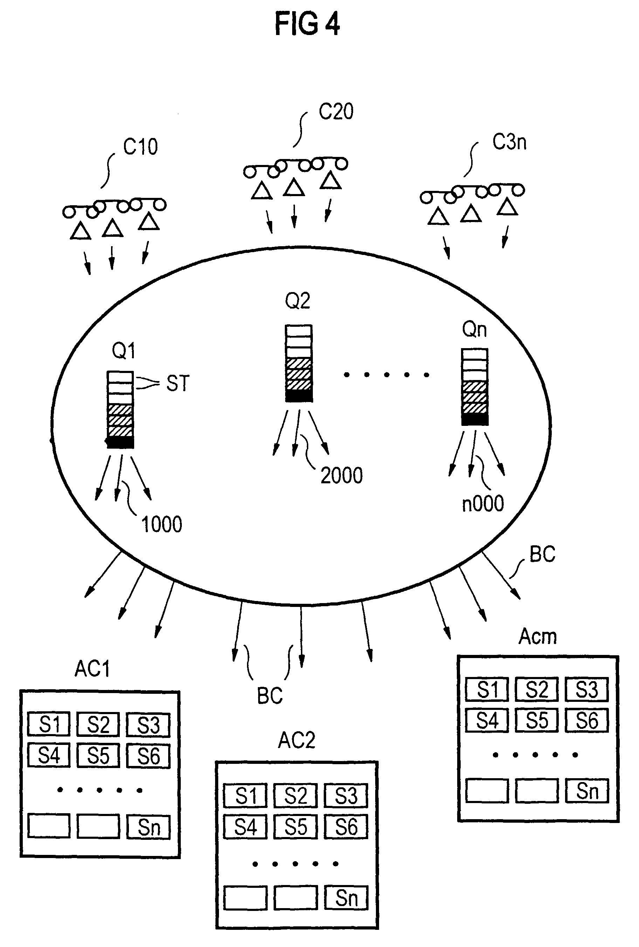

Figur 4 zeigt, wie unterschiedliche Teilnehmeranrufe C10, C20 bis C3n auf unterschiedliche Warteschlangen Q1, Q2, Qn aufgeteilt werden können. Die Teilnehmer C10 werden beispielsweise einer Warteschlange Q1, die Anrufer C20 einer Warteschlange Q2 und die Teilnehmer C3n einer Warteschlange Qn zugeordnet. Die Teilnehmer C können aber auch bezüglich bestimmter Kriterien auf unterschiedlichste Warteschlangen verteilt werden. Beispielsweise sind die Anrufer nach Art eines Stacks ST hintereinander in der Warteschlange Q angeordnet. Über Verbindungen 1000, 2000 und n000 können diese Wartenden Anrufe dann an unterschiedlichste Operatorvermittlungsplätze AC1 bis Acn über eine Rundruffunktion BC weitergegeben werden.

Ein Operator kann dann aus diesen Anrufen in den jeweiligen Warteschlangen Q mittels Tasten S1 bis Sn einen jeweiligen Anrufer auswählen. Durch die Modulen ANQ, AO-CP, AC-CP, wird sichergestellt, daß alle Operatoren an ihren Operatorvermittlungsplätzen alle Anrufer C, bzw. die Anrufer, die in den Warteschlangen Q vorne stehen, angezeigt bekommen und auswählen können, und daß derjenige Operator, welcher einen wartenden Anruf zuerst auswählt, mit diesen verbunden wird, während die anderen auf der entsprechenden Taste den nächsten Anrufer in der jeweiligen Warteschlange dargestellt erhalten. In den Warteschlangen können die Anrufer C bezüglich ihrer Wichtigkeit, bestimmter Sachgebiete, oder beliebiger anderer Kriterien geordnet sein.

Ein ankommender Anruf wird z.B. bei gedrückter Maustaste im Detail angezeigt. Beispielsweise erfolgt für den jeweils als nächsten wartenden Anruf aus der mit dem Cursor Cur markierten Warteschlange die Anzeige der im System bekannten Anruferdaten, wie Name, Rufnummer, Richtung, am Display. Seine Auswahl kann über das Loslassen der Maustaste erfolgen, wozu das Umkoppeln des ausgewählten Anrufes auf ein freies Abfrageorgan des Abfragenden Operatorvermittlungsplatzes durch das Modul AMQ erfolgt. Für diesen Fall kann eine automatische Umschaltung zwischen den beiden Bedienoberflächen für Standardleistungsmerkmale ACWIN-UI und der Bedienoberfläche für zusätzliche Leistungsmerkmale MQ-UI erfolgen.

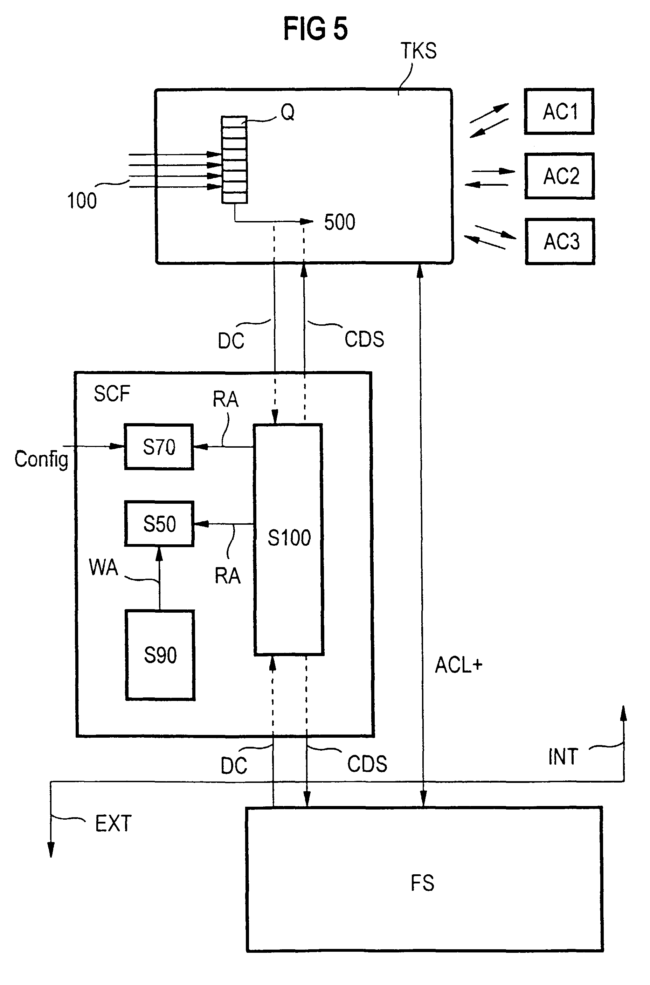

Figur 5 veranschaulicht die Funktion des Moduls SCF bei der Entgegennahme von Anrufen mehrerer Teilnehmer und der Zuweisung dieser Anrufe, bzw. der Auswahl dieser Anrufe, von Operatorvermittlungsplätzen AC1 bis AC3. Im Telekommunikationssystem TKS ist beispielsweise eine integrierte Realisierung für die Verarbeitung von zwei logischen Warteschlangen AQ und MQ bereits vorgesehen zur Organisation von Teilnehmern in den Einfachwarteschlangen und zur Organisation von Teilnehmern in den parallelen Warteschlangen. Diese beiden logischen Warteschlangen werden den Operatorvermittlungsplätzen AC über 500, wie bereits in Figur 4 erläutert, so präsentiert, daß sie die Übersicht über alle Warteschlangen und die Teilnehmer, sowie die Möglichkeit der Auswahl einer Verbindung zu einem der Teilnehmer haben.

Beispielsweise wird über das Modul SCF ein Verteilungsflag abgefragt, über welches das Leistungsmerkmal Bearbeitung mehrerer Warteschlangen durch die Operatorvermittlungsplätze abgefragt wird und anhand dessen entschieden wird, ob die Anrufe auf mehrere Operatorvermittlungsplätze AC zu verteilen sind oder nicht. Bezüglich der eintreffenden Anrufe 100 in der Warteschlange Q wird eine Verteilungsanfrage DC an die Serverkontrollfunktion SCF gestartet. In einem Modul S100 werden beispielsweise Serverkontrollflags S70 und S50 per Lesezugrift RA abgefragt. Diese Flags sind entsprechend durch Vorabeingaben über Config konfigurierbar. In S50 sind dem lediglich temporäre Serverkontrollflags abgelegt, die beispielsweise durch ein Modul S90 mittels Schreibzugriff beispielsweise für Tag- und Nachtbetrieb gesetzt werden. Der Status beider Flags zusammen ergibt das zuständige aktive Modul für die jeweilige Situation. Mittels DC werden ebenfalls im Leistungsmerkmalserver FS extern vorhandene Realisierungen von Leistungsmerkmalen abgefragt. Beispielsweise sind dort Mittel vorhanden um 12 Warteschlangen zu verarbeiten und die Anrufe auf spezifisch gruppierte Operatorvermittlungsplätze, bzw. alle Operatorvermittlungsplätze zu verteilen.

Das Ergebnis dieser Anfrage wird über CDS sowohl an das Telekommunikationssystem TKS, als auch an den Operatorvermittlungsplatz AC weitergegeben. An den Operatorvermittlungsplätzen AC werden die Anrufe gemäß dem Abfrageergebnis präsentiert. Mit INT sind Modulen bezeichnet, die auf dem Telekommunikationssystem vorhanden sind und mit EXT Modulen, die auf dem Leistungsmerkmalserver FS vorhanden sind. Über ACL+ ist angedeutet, daß spezielle Leistungsmerkmale lediglich im Leistungsmerkmalserver realisiert sind. ACL+ kann beispielsweise über ein Protokoll für die Steuerung von Vermittlungsfunktionen des Telekommunikationssystems TKS über einen externen Rechner realisiert sein

## Patentansprüche

1. Verfahren zur Betrieb eines Operatorvermittlungsplatzes in einem Telekommunikationssystem mit folgenden Merkmalen:
a) der Operatorvermittlungsplatz (AC) verfügt über eine erste Menge von Leistungsmerkmalen zur Vermittlung von Teilnehmerverbindungen (100);
b) mindestens eine erste Teilmenge von Leistungsmerkmalen der ersten Menge wird von einem Leistungsmerkmalserver (FS) bereitgestellt;
c) der Operatorvermittlungsplatz (AC) kommuniziert bezüglich der ersten Teilmenge mit dem Leistungsmerkmalserver (FS).

2. Verfahren nach Anspruch 1, bei dem das Telekommunikationssystem (TKS) für den Fall, daß von einem Operatorvermittlungsplatz (AC1, AC2, AC3) auf ein Leistungsmerkmal aus der ersten Teilmenge zugegriffen wird, mit dem Leistungsmerkmalserver (FM) kommuniziert.

3. Verfahren nach einem der vorangehenden Ansprüche, bei dem eine zweite Teilmenge der ersten Menge von Leistungsmerkmalen vom Telekommunikationssystem (TKS) bereitgestellt wird, und der Operatorvermittlungsplatz (AC) bezüglich der zweiten Teilmenge mit dem Telekommunikationssystem (TKS) kommuniziert.

4. Verfahren nach einem der vorangehenden Ansprüche, bei dem durch mindestens einen Teil von Leistungsmerkmalen der ersten Teilmenge die Präsentation einer Mehrzahl von Teilnehmerwarteschlangen (Q) am Operatorvermittlungsplatz (AC) realisiert wird.

5. Verfahren nach einem der vorangehenden Ansprüche, bei dem durch mindestens einen Teil der Leistungsmerkmale der ersten Teilmenge die Auswahl von Teilnehmern aus einer Mehrzahl von Warteschlangen (Q1,...Kn) realisiert wird.

6. Verfahren nach einem der Ansprüche 3 bis 5, bei dem für den Zugriff auf die erste Teilmenge eine erste Bedienoberfläche (ACWIN-UI) und für den Zugriff auf die zweite Teilmenge eine zweite Bedienoberfläche (MQ-UI) im Operatorvermittlungsplatz (AC) verwendet wird.

7. Anordnung zum Betrieb eines Operatorvermittlungsplatzes in einem Telekommunikationssystem mit folgenden Merkmalen:
a) es ist ein Telekommunikationssystem (TKS) vorhanden;
b) es ist ein Operatorvermittlungsplatz (AC) vorhanden;
c) es ist ein separater Leistungsmerkmalserver (FS) vorhanden, mit ersten Mitteln zur Bereitstellung von Leistungsmerkmalen (ANQ) für den Operatorvermittlungsplatz (AC);
d) der Operatorvermittlungsplatz (AC) ist über eine erste Verbindung (V24) mit dem Telekommunikationssystem (TKS) verbunden;
e) der Operatorvermittlungsplatz (AC) ist über ein lokales Netz (LAN) mit dem Leistungsmerkmalserver (FS) verbunden;
f) der Leistungsmerkmalserver (FS) ist über eine Datenleitung (CTI), insbesondere eine CTI-Schnittstelle, mit dem Kommunikationssystem (TKS) verbunden.

8. Anordnung nach Anspruch 7,
a) bei der im Telekommunikationssystem (TKS) erste Mittel (AO-CP, AC-CP) zur Bereitstellung einer ersten Menge von Leistungsmerkmalen für den Operatorvermittlungsplatz (AC) vorhanden sind,
b) bei der im Leistungsmerkmalserver (FS) zweite Mittel (AMQ) zur Bereitstellung einer zweiten Menge von Leistungsmerkmalen vorhanden sind,
c) und bei dem im Telekommunikationssystem (TKS) Mittel zur Steuerung des Zugriffs (SCF) auf Leistungsmerkmale der ersten Teilmenge, bzw. der zweiten Teilmenge vorhanden sind.

9. Anordnung nach Anspruch 8, bei der im Operatorvermittlungsplatz (AC) Mittel zum jeweils separaten Zugriff auf Leistungsmerkmale der ersten Teilmenge bzw. Leistungsmerkmale der zweiten Teilmenge vorhanden sind (ACWIN-UI, MQ-UI, S1, S5, CUR).

10. Anordnung nach einem der Ansprüche 8 oder 9, bei der Mittel zur separaten Auswahl eines Anrufers aus einer von mehreren Warteschlangen (Q) vorhanden sind (S1, S5, CUR).
